Europäisches Patentamt

European Patent Office

Office européen des brevets

(19)

(11) Publication number: **0 215 983**
**A1**

(12) **EUROPEAN PATENT APPLICATION**

(21) Application number: **85306111.7**

(22) Date of filing: **29.08.85**

(51) Int. Cl.⁴: **B 65 G 17/08**

(43) Date of publication of application:
**01.04.87 Bulletin 87/14**

(84) Designated Contracting States:
**DE FR GB IT**

(71) Applicant: **The Laitram Corporation**
**220 Laitram Lane**
**Harahan Louisiana 70123(US)**

(72) Inventor: **Lapeyre, James M.**
**13 Richmond Place**
**New Orleans Louisiana 70115(US)**

(74) Representative: **Arthur, John William et al,**
**FITZPATRICKS 4 West Regent Street**
**Glasgow G2 1RS Scotland(GB)**

(54) End to end moulded conveyor belt module.

(57) A module for forming by a simple two-piece mould, a conveyor belt of integral plastic moulded construction and having a conveying surface of selected cross-sections is disclosed. The module includes a first plurality (22) of pivot ends joined to a second plurality (24) of pivot ends by means of an intermediate section (34). Each of the first and second pluralities of pivot ends define apertures (26, 30) suitable for receiving a pivot rod (16, 18, 20). The intermediate section (34) joins and connects the first and second pluralities of pivot ends (22, 24) such that the pivot axis (26, 28, 32) formed by aligning the first pluralities and second pluralities of apertures respectively are maintained parallel to each other and define a common plane (36). Each of the modules includes means for receiving a driving force such as a tooth (40) for moving the module orthogonal to the pivot axis (28, 32) and substantially parallel to the common plane (36).

Fig. IOA

EP 0 215 983 A1

0215983

END TO END MOULDED CONVEYOR BELT MODULE

This invention relates to a conveyor belt formed of modules having a conveying surface of a selected cross-section including a channel shaped surface for conveying tubular or cylindrically stacked items and wherein the pivot ends of a module is joined by intermediate sections to form elongated portions and wherein the elongated portions are themselves joined by crossmembers. More specifically, the invention relates to modules for forming a conveyor belt which can be formed by a simple two piece injection mould.

A typical modular conveyor belt is disclosed in U.S. Patent 3,870,141. According to this patent, identical modules formed by injection moulding are pivotally connected to one another to form a conveyor belt of a desired length and width. Each module includes a plurality of elongated elements, each of which has a first pivot end and a second pivot end. The plurality of elongated elements are connected together such that apertures defined in each of the first and second pivot ends lie along a first and second pivot axis respectively, which pivot axis are parallel one to the other. The pivot ends of one module are intermeshed and pivotally connected by means of a pivot rod to the pivot ends of another module until an entire belt having a desired length and width is formed. The plastic belt built according to the teachings of this invention has been well received by industry and has many particular uses. The module itself is typically injection moulded out of plastics by means of a simple two-piece mould which includes two "halves". One "half" typically moulds the bottom portion of the module and the other half typically moulds the top portion. In such simple two piece moulds, however it will be appreciated that it is impossible to mould complex upper conveying surfaces and at the same time eliminate all excess plastics since such moulding would result in undercuts and make it impossible for the mould halves to separate.

U.S. Patent 4,171,045 recognized the need for including a conveying surface which would not allow objects riding on the conveyor surface to slip and thereby allow the belt to pass underneath. The belt disclosed and formed by the teachings of U.S. Patent 4,171,045 is similar that that of U.S. Patent 3,870,141 discussed heretofore except that selected ones of elongated members include a plurality of "dogs" which extend above the normal portion of the conveying surface to contact and push articles on the conveying surface such that the belt will not slip underneath. However, it can be seen that such a conveying surface is still rather simple and can readily be injection moulded by mould halves, one half of which moulds the bottom portion of the module and the other half of which moulds the top half.

In a similar manner, U.S. Patent 4,213,527 further discloses a module for forming a link conveyor belt which has ridges or flight members extending transverse to the direction of travel for preventing the conveyor belt from slipping under articles riding on the conveyor surface. A study of this patent, discloses that the particular modules may be moulded by an extrusion process and then the link ends cut in by blades. Similarly, U.S. Patent 4,170,281 and U.S. Patent 4,080,842 also show conveying belts having members extending transverse to the conveying surface for moving articles on the conveying surface along the belt such that the belt cannot slip underneath the article. Again, these patents may readily be moulded by a simple two-piece mould one half of which moulds the bottom half of the module and the other half moulds the top half of the module.

Thus, a review of the patents of the prior art reveals that except for the module formed by the extrusion process described in U.S. Patent 4,213,527 discussed heretofore, to date all moulding of conveyor belt modules has been by the two-piece moulding process wherein the one half of the mould moulds the bottom portion of the module and the other half of the mould, moulds the top portion of the module. Further, by such an injection moulding technique it is not possible to mould a complex upper conveying surface. Therefore, it is an object of this invention to provide a module for forming a conveyor belt which belt has a complex upper conveying surface.

It is another object of the present invention to provide a simple and inexpensive method of injection moulding modules having a complex upper surface.

Other objects and advantages will be obvious and will in part appear hereinafter, and will be accomplished by the present invention which provides a module for forming a conveyor belt made of integral plastic moulded construction. The module comprises a first plurality or group of pivot ends which are parallel to each other and which define a pivot aperture. The pivot apertures of this first plurality of pivot ends are all aligned along a first pivot axis. In a similar manner, there is a second plurality of parallel pivot ends each of which also define a pivot aperture and which apertures are aligned along a second pivot axis. The two pluralities of pivot ends are then connected and joined such that the first and second pivot axis are maintained parallel to each other and such that the pivot axis define a common plane. There is also included a means for receiving a driving force by the module such as a tooth for cooperating with a recess in a drive sprocket, or alternately a recess in the module for cooperating with a driving tooth extending from a sprocket. This means for receiving the driving force moves the module orthogonal to the pivot axis and substantially parallel to the common plane. According to this particular invention, the module is further formed such that every surface on the module, except surfaces defining the pivot apertures, may be observed by viewing along first and second pluralities of lines of sight. Each of the first and second pluralities of lines of sight are both perpendicular to the pivot axis and parallel to the common plane. The first plurality of lines of sight extend from the first pivot ends toward the second pivot ends. In a similar, but opposite manner, the second plurality of lines of sight extends from the second pivot ends and toward the first pivot ends. The modules may also be formed such that the first plurality of pivot ends are in register with like pivot ends of the second plurality, or alternatively the first plurality of pivot ends may be laterally offset from the second plurality of pivot ends such that each pivot end of the first plurality is in register with the spaces between the pivot ends of the second plurality and vice versa.

Also of particular importance is that the present module may be moulded by a simple two-piece mould such that the intermediate section includes a conveying surface of many selected shapes which may be located on the upper side of the module. In particular, the conveying surface may form a channel having substantially any cross section including curved, and which extends both perpendicular to the pivot axis and parallel to the common plane. A conveying belt formed of modules defining such channels is particularly suitable for conveying items which define a tubular shape. In particular, such a conveying belt is suitable for conveying a series of a plurality of stacked disc-shaped items such as round cookies, coins, stamping, etc.

Embodiments of the invention will be described by way of example only with reference to the accompanying drawings in which:

Fig. 1 shows a module of a conveyor belt incorporating the features of this invention.

Fig. 2 shows one of the elongated elements broken out of the module of Fig. 1.

Figs. 3A, 3B and 3C show a perspective view, a side view and a top view respectively of an alternative embodiment of the present invention wherein the two pluralities of pivot ends are not offset.

Figs. 4A and 4B show a perspective view and a side view respectively of still another alternate embodiment of the present invention wherein the module is suitable for being driven in either of two directions.

Fig. 5 shows yet another embodiment of the present invention similar to that shown in Fig. 1.

Fig. 6 shows still another embodiment of the present invention.

Fig. 7 shows a link belt made of modules of the types shown in Figs. 1 or 5 cooperating with a sprocket wheel.

Fig. 8 shows a conveyor belt formed of modules of the type shown in Figs. 1, 3 or 4, cooperating with a sprocket.

Fig. 9 shows a conveyor belt formed of modules of the type shown in Figs. 3, 4 or 6 wherein the belt is driven by sprocket teeth cooperating with the pivot ends of the conveyor belt.

Fig. 10A shows a module similar to the type shown in Fig. 1 and further including a conveyor surface suitable for conveying tubular shaped items.

Fig. 10B shows the end view of the Fig. 10A and further shows by dashed lines how the module conveys tubular items.

Fig. 11 is a perspective view of portions of three of the modules similar to that shown in Fig. 10A and illustrating how the conveyor belt conveys tubular shaped items including stacked disc items.

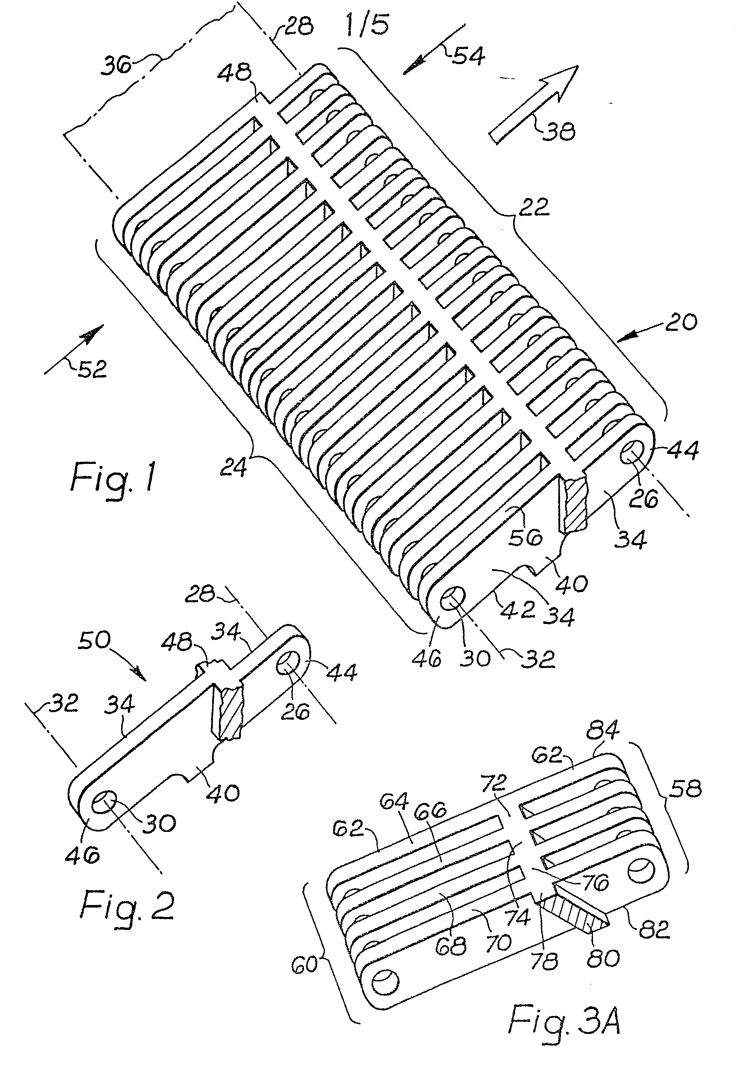

Referring now to Fig. 1, there is shown generally at 20 a perspective view of a portion of a module incorporating the features of this invention. As shown, module 20 includes a first plurality of pivot ends 22 and a second plurality of pivot ends 24. As shown, each of the first plurality of pivot ends 22 define apertures such as aperture 26 all of which are aligned along a first pivot axis 28. In a similar manner, each of the pivot ends 24 also define apertures such as aperture 30, and which are also all aligned along a second pivot axis 32. An intermediate section 34 connects and joins pivot ends 22 and 24 such that the first pivot axis 28 and the second pivot axis 30 are maintained parallel to each other and define a common plane 36. Each of the modules of this invention will also include some means for receiving a driving force such that the module may be moved orthogonally to the pair of pivot axes 28 and 30 and also in a direction substantially parallel to common plane 36. Heavy arrow 38 indicates the direction of motion of the module. In the embodiment shown in Fig. 1, the means for receiving the driving force is a tooth 40 which extends from the bottom side 42 of the module. Although, a driving tooth, such as tooth 40 may be included on the bottom portion of each of the intermediate sections comprising the module, it is only necessary that selected ones of the intermediate sections include a driving tooth 40. As is also clear in Fig. 1, intermediate section 34 in

- 7 -

addition to joining a pair of pivot ends such as pivot ends 44 and 46 also include a series of cross portions represented generally by reference number 48 which maintain the first and second pivot ends parallel to each other and also separated at a selected spacing.

Referring now to Fig. 2, there is shown a single elongated section, generally indicated by reference number 50, which was taken or broken away from the module 20. As can be seen, each individual elongated portion or element 50 joins a pair of pivot ends 46 and 44 by means of the intermediate section 34 such that the tensile forces can be transmitted from between the two pivot axes 28 and 32.

Of significant importance to the present invention is that the module shown in Fig. 1 is designed such that every surface on the module, except those surfaces which define the pivot apertures, may be observed by viewing the module along first and second pluralities of lines of sight, such as lines of sight 52 and 54. Both of the first and second pluralities of lines of sight are perpendicular to the pivot axis 32 and both pluralities of the lines of sight are parallel to the common plane 36. In addition, the first plurality of lines of sight extend from the first plurality of pivot ends toward the second plurality of pivot ends, and the second plurality of lines of sight extend from the second plurality of pivot ends towards the first plurality of pivot ends. Thus, by meeting this criteria the modules may be formed by an injection moulding process wherein the mould halves open and close in a direction parallel to the lines of sight, rather than the normal method of opening such moulds in a direction perpendicular to the lines of sight and from the upper surface 56 and the lower surface 42.

Referring now to Fig. 3A, there is shown a perspective view of another embodiment of the present invention wherein the first plurality of link ends 58 and the second plurality of link ends 60 are joined by an intermediate section 62 which includes some elongated portions such as 64, 66, 68 and 70 and which are joined by cross-portions 72, 74, 76 and 78. It is also interesting to note that according to this embodiment, the cross-portion 72, 74, 76 and 78 which may be generally indicated as cross-rib 80 slopes from the bottom portion 82 closest to the pivot ends 58 toward the second plurality of pivot ends 60 at the top surface 84. In this manner and as will be discussed later the cross-rib 80 or the individual connecting portions such as 72, 74, 76 and 78 may be used as contact surfaces for cooperating with a driving tooth for providing the driving force to a belt made up of such modules.

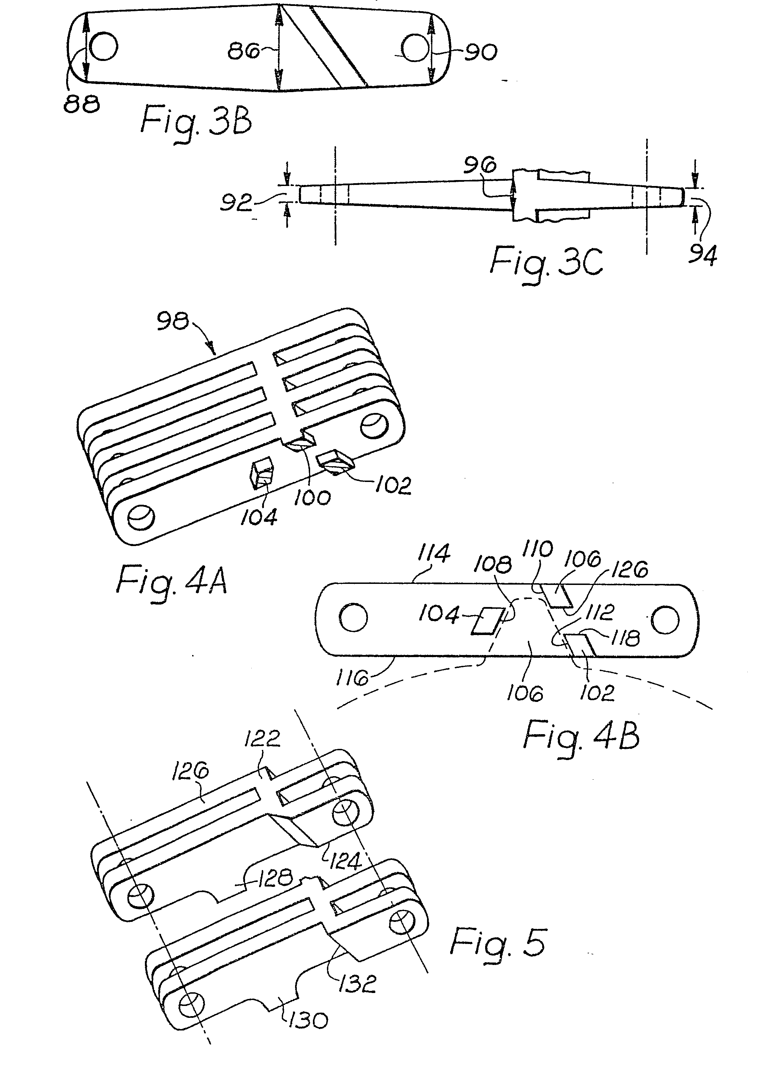

Figs. 3B and 3C show side and top views respectively of single elongated elements making up the module shown in Figs. 3A. As is more readily seen in Fig. 3B, the dimension represented by double-headed arrow 86 is greater than the two end dimensions represented by double headed arrows 88 and 90 respectively. In a similar manner and as shown in Fig. 3C, the end thickness represented by double-headed arrows 92 and 94 is smaller than the mid thickness represented by double-headed arrow 96. Although these differences in dimensions such as between broad dimension 86 compared to dimensions 88 and 90, and widths 92 and 94 when compared to 96 may be exaggerated in the Figs. 3B and 3C it will be appreciated by those skilled in the art that such differences in dimensions is most desirable when forming the modules by an injection moulding process by moulds opening end to end to greatly increase the ability of removing the mould part from the two mould halves. That is, if dimensions 86, 88 and 90 were exactly the same, and if dimensions 92, 94 and 96 were exactly the same, removal of the moulded module from the mould halves would be most difficult. Further, it will be appreciated that although the difference in such dimensions is not readily obvious in viewing Figs, 1, 2 and the remaining of the modules discussed hereinafter, it will be appreciated that such differences are desirable with respect to all of the modules discussed hereinafter to facilitate removal of the module from the mould halves.

Referring now to Fig. 4A, there is shown still another embodiment incorporating the features of this invention. As shown, the module 98 shown in Fig. 4A is substantially similar to the module shown in Fig. 3A except that instead of a single cross-rib 80, the module in 4A includes three smaller cross-ribs or cross-portions generally indicated as cross-portions 100, 102 and 104. Other than these cross-ribs, the module of Fig. 4A is the same as the module in Fig. 3A. Fig. 4B shows a side view of the module of Fig. 4A and further includes in phantom or dashed lines a tooth of a sprocket wheel suitable for driving a conveyor belt comprised of such modules. As can be seen, the tooth 106 of the sprocket wheel cooperates with contact surface 108 on cross-portion 104 and contact surfaces 110 and 112 on cross-portions 100 and 102 respectively. As will be discussed in more detail hereinafter, the provision of the cross-rib in this manner allows a belt formed of such modules to be driven in either direction. It is also important to note, that the cross-portions 100, 102 and 104 are so positioned betweenthe upper surface 114 and the lower surface 116 of the module so that there is no overlap. That is, the thickness of cross-portion 104 is somewhat less than the distance between the top surface 118 of cross-portion 102 and the bottom surface 120 of cross-portion 100. It is necessary of course that the cross-portions do not overlap in order that the criteria concerning the two pluralities of lines of sight can be met and to assure that the mould halves may be opened.

Referring now to Fig. 5, there is shown still another embodiment of a module according to the teachings of this invention. The module of Fig. 5 is substantially the same as that of Fig. 1, except that the cross-portion represented generally by reference number 122 as shown in Fig. 5 slopes from the bottom portion 124 to the top portion 126 in a direction opposite of that shown for the cross-portion of Fig. 1. Although not shown in detail, by including drive teeth such as teeth 128 and 130 on selected and spaced elongated elements, it is possible to use the contact surface of the cross-portion 122 such as the surface 132 as a contact surface for cooperating with a drive tooth such as discussed with respect to Fig. 4B. By such a design, a module such as that shown in Fig. 5 may be driven by two methods namely, by a tooth on the module such as teeth 128 or 130 or alternately by a tooth extending from a drive sprocket and cooperating with contact surface 132.

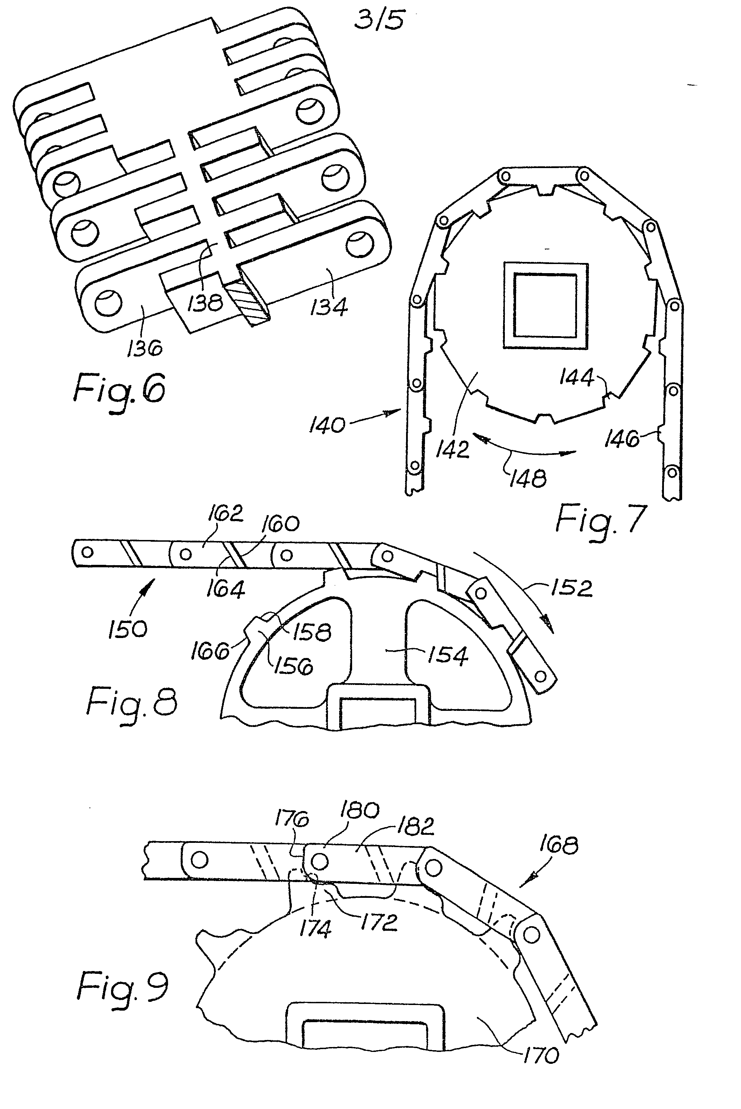

Fig. 6 shows still another embodiment of a module incorporating the teachings of this invention. Although this hybrid module is believed not to be as desirable as those discussed heretofore, it serves to illustrate how modules of different structure may be formed to incorporate the teachings of the present dinvention. As can be seen from the module of Fig. 6, each of the pluralities of link ends such as link end 134 is joined to its cooperating link end such as link end 136 either by means of an intermediate connecting portion 138 or by having the intermediate elongated portions of the intermediate sections thick enough such that the two pivot ends may be attached and still remain offset.

Referring now to Fig. 7, there is shown a side view of a link belt formed of modules similar to that shown in Figs. 1, 2 or 5, and represented by reference number 140, driven by a drive sprocket 142 which includes a series of recesses such as recess 144 for receiving the teeth found on the various link modules such as tooth 146. It will be appreciated by those skilled in the art, that a link belt of this type using drive teeth such as teeth 146 may be driven in either direction as indicated by double-headed arcuate arrow 148.

As shown in Fig. 8, there is a side view of a link belt shown generally at 150 suitable for being driven only in a single direction indicated by single-headed arcuate angle 152 by means of teeth on a sprocket 154 such as tooth 156. As can be seen, tooth 156 has a contact surface 158 which will make contact with the cross-portion 160 of link 162 at contact surface 164. Rotation of the sprocket 154 will thus result in moving of the belt 150 as shown by arcuate arrow 152. It is important to note that as mentioned above, according to this particular embodiment, the belt 150 may only be driven in the direction indicated by the arrow 152 as there is no contact surface at which the back surface 166 of tooth 156 could contact. Thus, back surface 166 may be of substantially any shape because of the unitary direction of drive of this belt and sprocket system. With respect to Fig. 8, however, referring again to Fig. 4B, there is shown, as was discussed heretofore, how a somewhat similar belt formed of modules of the type of Fig. 4A could be driven in both directions.

Referring now to Fig. 9, there is shown still another alternate embodiment of a modular belt represented generally by reference number 168 and which is driven by a sprocket wheel 170. The drive system shown in Fig. 9 could be used with respect to drive belts made up of modules similar to those shown in Figs. 3A, 4A or 6. As shown, each of the teeth such as tooth 172 includes a contact surface 174 which cooperates with a contact surface 176 on the pivot end 180 of the module 182. Thus, it will be appreciated that belts formed of the various types of modules which may be formed according to the teachings of this invention may be driven by various types of drive system.

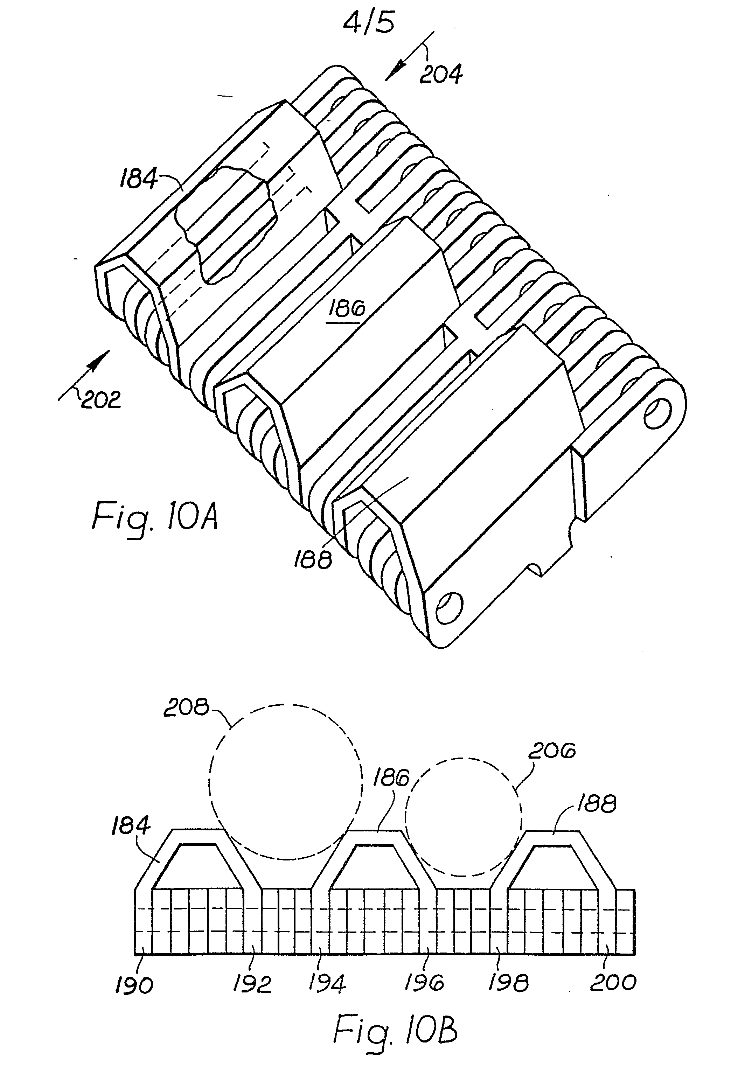

Referring now to Figs. 10A and 10B, there is shown a perspective and an end view respectively of a module incorporating the teachings of this invention. As can be seen, the modules shown in Figs. 10A and 10B are substantially similar to that shown in Fig. 1 except they further include longitudinal member portions 184, 186 and 188. As can be seen, these longitudinal portions each represent three sides of an irregular hexagon in a sense that the three sides are not necessarily equal in length and the angles are not necessarily 60° and are integrally moulded with certain ones of the elongated members comprised of intermediate sections and pivot ends. As can more readily be seen in Fig. 10B, hexagon portion 184 is integrally moulded with the pivot end and intermediate portion making up elongated members 190 and 192. In a similar manner, hexagon portion 186 is integrally moulded with member 194 and 196, and hexagon portion 188 is integrally moulded with elongated member 198 and 200. It should also be observed, that in accordance with the previous teachings of thé present invention and as is now indicated by lines of sight arrows 202 and 204, the module of Figs. 10A and 10B can also be moulded by means of a simple two-piece mould wherein the mould halves open from the respective ends rather than from the top and bottom of the module. Further, as can be more easily seen in Fig. 10B the modules of Figs. 10A and 10B are particularly suitable

- 13 -

for conveying tubular shaped items such as items 206 and 208 indicated by dashed lines and resting between hexagon portions 184 and 186, and 186 and 188 respectively.

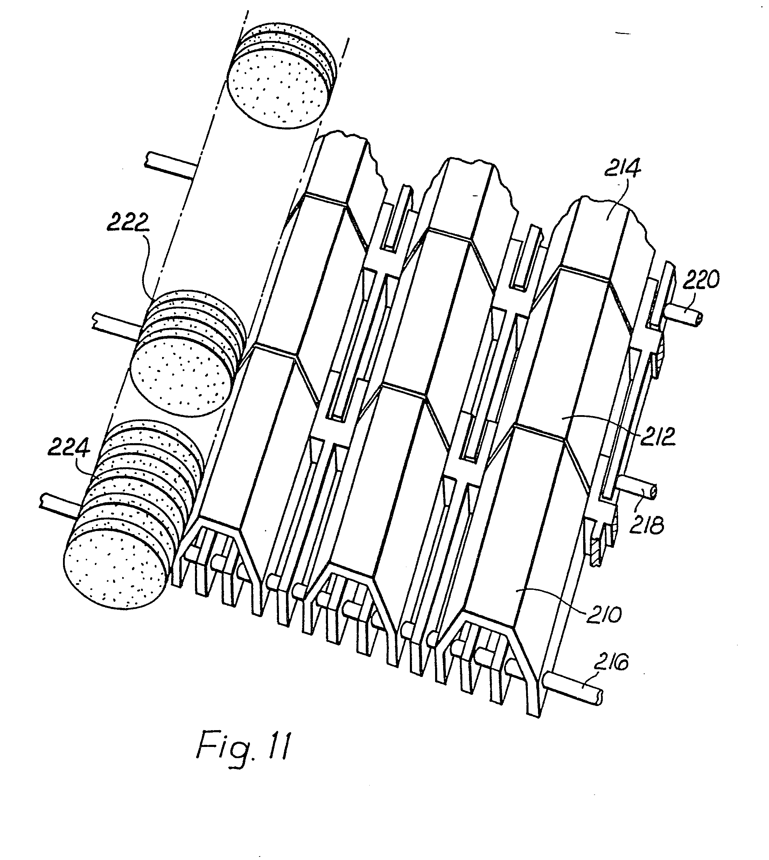

Referring now to Fig. 11, there are shown portions of three modules such as modules 210, 212 and 214 pivotally joined by pivot rods 216, 218 and 220. As can be seen, when a plurality of modules similar to those shown and discussed in Figs. 10A and 10B are arranged end to end and pivotally joined, the channels created by the hexagon members form long channels which can be used for transporting or conveying long tubular shaped items. In addition, and as more specifically shown in Fig. 11 rather than being an individual item, the tubular shaped member may instead be formed of a plurality of stacked disc shaped items such as cookies shown at reference numbers 222 and 224. As will be appreciated by those familiar with the cookie manufacturing process, it is often desirable to stack the cookies under edges end-to-end to allow for more complete and thorough cooling and/or freezing. The belt with these corrugated channels lends itself to conveying ball-like objects such as various kinds of fruit, since these objects may roll along the conveyor in the direction of travel of the conveyor but cannot roll sideways on the conveyor thereby falling off the conveyor. This allows these ball-like items to be conveyed in well defined rows, one behind the other and to some extend automatically from columns of the round objects.

Thus, it will be appreciated that although specific example of conveying belt modules have been described, all other types of modules which meet the two pluralities of lines of sight criteria described heretofore are included within the scope of this invention and it is not intended that the specific references be considered

- 14 -

as limitations upon the scope of the invention except insofar as set forth in the following claims.

0215983

CLAIMS

1. A module made of integral plastic moulded construction for forming conveyor belts, each module comprising:

a first plurality of parallel pivot ends, each defining a pivot aperture, said pivot apertures of said first plurality of pivot ends being aligned along a first pivot axis;

a second plurality of parallel pivot ends, each defining a pivot aperture, said pivot aperture of said second plurality of pivot ends being aligned along a second pivot axis;

an intermediate section connecting said first and second pluralities of pivot ends such that said first and second pivot axis are maintained parallel to each other and define a common plane;

means for receiving a driving force by said module to move said module orthogonally to said pivot axis and substantially parallel to said common plane; and

said module being formed such that every surface thereon, except surfaces defining said pivot apertures, may be observed by viewing along first and second pluralities of lines of sight, each of said first and second pluralities of lines of sight being both perpendicular to said pivot axis and parallel to said common plane, said first pluralities of lines of sight extending from said first plurality of pivot ends toward said second plurality of pivot ends, and said second pluralities of lines of sight extending from said second plurality of pivot ends toward said first plurality of pivot ends.

2. The module of claim 1 wherein said first plurality of pivot ends of said module are laterally offset from said second plurality of pivot ends such that said pivot ends of said first plurality are in register with the spaces between said pivot ends of said second plurality, and said pivot ends of said second plurality are in register with the spaces between said pivot ends of said first plurality.

3.    The module of claims 1 or 2 wherein said module has an upper side and a lower side and said intermediate section further includes a conveying surface of a selected shape on said upper side.

4.    The module of claim 3 wherein said selected shape of said conveying surface is at least one channel having a selected cross-section and extending both perpendicular to said first axis and parallel to said common plane.

5.    The module of claim 4 wherein said selected channel of said conveying surface has a non-rectangular cross-section suitable for conveying items defining a tubular shape.

6.    The module of claim 5 wherein said items defining said tubular shape may include a stacked plurality of disc shaped items.

7.    The module of claim 1 wherein said first plurality of pivot ends is equal to said second plurality of pivot ends, or is one pivot end less than said second plurality of pivot ends and said intermediate section includes first elongated portions connected to said first pivot ends and extending toward said second pivot ends and second elongated portions connected to said second pivot ends and extending toward said first pivot ends, and further include cross-portions for joining said elongated portions.

8.    The module of claim 7 wherein said module has an upper side and a lower side and wherein said means for receiving a driving force is a tooth extending from said bottom side for engaging a cooperating recess in a drive sprocket.

9. The module of claim 7 wherein said module has an upper side and a lower side and wherein said means for receiving a driving force is a contact surface defined in said bottom side of said module for receiving a cooperating tooth extending from a drive sprocket.

10. The module of claim 9 wherein said contact surface is the same as one of said cross-portions of said intermediate section.

11. The module of claim 9 wherein said contact surface is a recess defined by at least two of said cross-portions of said intermediate section, one of said at least two cross-portions being located closer to said first pivot axis, the other of said at least two cross-portions being located closer to said second pivot axis, and said at least two cross-portions being spaced between said upper and lower sides so that they do not overlap when observed along either of said first and second lines of sight.

12. The module of claims 8, 9, 10 or 11 wherein said intermediate section further includes a conveying surface of a selected shape on said upper side.

13. The module of claim 7 wherein said means for receiving a driving force is a contact area on selected ones of said pivot ends suitable for receiving a cooperating tooth extending from a drive sprocket.

14. The module of claim 2 wherein said first plurality of pivot ends is equal to said second plurality of pivot ends, or is one pivot end less than said second plurality of pivot ends, and said intermediate section includes first elongated portions connected to said first pivot ends and extending toward said second pivot ends and second elongated portions connected to said second pivot ends and extending toward said first pivot ends, and further includes cross-portions for joining said elongated portions.

15. The module of claim 14 wherein said module has an upper side and a lower side and wherein means for receiving a driving force is a tooth extending from said bottom side for engaging a cooperating recess in a drive sprocket.

16. The module of claim 14 wherein said module has an upper side and a lower side and wherein said means for receiving a driving force is a contact surface defined in said bottom side of said module for receiving a cooperating tooth extending from a drive sprocket.

17. The module of claim 16 wherein said contact surface is the same as one of said cross-portions of said intermediate section.

18. The module of claim 14 wherein said means for receiving a driving force is a contact area on selected one of said pivot ends for receiving a cooperating tooth extending from a drive sprocket.

19. The module of claims 15, 16, or 17 wherein said intermediate section further includes a conveying surface of a selected shape on said upper side.

20. A plurality of the modules of claim 1 or 2 comprising a conveyor belt, each of said plurality of modules being positioned with respect to another one of said plurality of modules such that one of said first and second pluralities of pivot ends of a module is intermeshed with one of said first and second pluralities of pivot ends of another one of said pluralities of said modules, and further comprising: a plurality of modules to form a conveyor belt.

21. The conveyor belt of claim 20 wherein said first and second pluralities of pivot ends are further pivotally connected to form an endless loop.

22. The conveyor belt of claim 20 wherein said plurality of modules are further arranged in a side-by-side relationship with other ones of said plurality of modules such that the pivot axis defined by said first plurality of pivot ends and said second plurality of pivot ends respectively are coaxial with respect to adjacent side-by-side modules.

Fig. 1

Fig. 2

Fig. 3A

**Fig. 3B**

86  88  90

**Fig. 3C**

92  96  94

**Fig. 4A**

98  100  102  104

**Fig. 4B**

114  108  110  106  126  104  112  118  116  106  102

**Fig. 5**

126  122  124  128  132  130

0215983

Fig.6

Fig. 7

Fig. 8

Fig. 9

204

184

186

202

188

Fig. 10A

208

206

186

184

188

190    192    194    196    198    200

Fig. 10B

Fig. 11

## European Patent Office

**EUROPEAN SEARCH REPORT**

| DOCUMENTS CONSIDERED TO BE RELEVANT | | | EP 85306111.7 |
|---|---|---|---|
| Category | Citation of document with indication. where appropriate, of relevant passages | Relevant to claim | CLASSIFICATION OF THE APPLICATION (Int. Cl.4) |
| X | AT - B - 323 051 (LAITRAM CORP.). <br> * Fig. 1; page 2, lines 10-16; page 3, line 48; page 4, line 26 * | 1,7 | B 65 G 17/08 |
| A | * Page 4, lines 30,45 * | 3,5,20 | |
| | -- | | |
| | EP - A1 - 0 054 394 (ASHWORTH) | | |
| A | * Page 5, lines 11-14 * | 1 | |
| | -- | | |
| | US - A - 4 438 838 (HODLEWSKY) | | |
| A | * Fig. 1 * | 1-4 | |
| | -- | | |
| | US - A - 4 171 045 (LAPEYRE) | | |
| A | * Fig. 1 * | 1,3,7 | |
| | -- | | TECHNICAL FIELDS SEARCHED (Int. Cl 4) |
| | US - A - 4 159 763 (KEWLEY) | | |
| A | * Fig. 1 * | 1,7 | B 65 G |
| | -- | | |
| | DE - A - 1 456 857 (SOLAR THOMSON) | | |
| A | * Fig. 1 * | 20,21 | |
| | ---- | | |

The present search report has been drawn up for all claims

| Place of search | Date of completion of the search | Examiner |
|---|---|---|
| VIENNA | 31-10-1985 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82